# EUROPÄISCHE PATENTSCHRIFT

(11) **EP 1 425 200 B1**
(45) Veröffentlichungstag und Bekanntmachung des Hinweises auf die Patenterteilung: **28.02.2007**
(21) Anmeldenummer: 02774295.6
(22) Anmeldetag: 04.09.2002
(51) Int. Cl.: B60N 2/58

(54) **SITZBEZUG FÜR EINEN FAHRZEUGSITZ**
SEAT COVER FOR A VEHICLE SEAT
REVETEMENT D'UN SIEGE DE VEHICULE AUTOMOBILE

(30) Priorität: 04.09.2001 DE 10143214
(43) Veröffentlichungstag der Anmeldung: 09.06.2004
(73) Patentinhaber: Markfort, Thomas, 08523 Plauen (DE); Biermann, Ernst, 08547 Jössnitz (DE); Rau, Friedrich, 08261 Schöneck (DE)
(72) Erfinder: Markfort, Thomas, 08523 Plauen (DE); Biermann, Ernst, 08547 Jössnitz (DE); Rau, Friedrich, 08261 Schöneck (DE)
(74) Vertreter: von Puttkamer, Nikolaus
(86) Internationale Anmeldenummer: PCT/DE2002/003253
(87) Internationale Veröffentlichungsnummer: WO 2003/020549

(56) Entgegenhaltungen:
- GB-A- 783 480
- US-A- 6 161 231
- US-A1- 2002 087 532

## Beschreibung

Die vorliegende Erfindung betrifft einen Fahrzeugsitz mit einem Sitzbezug nach dem Oberbegriff des Patentanspruches 1.

Im Zusammenhang mit Fahrzeugsitzen besteht ein Problem darin, dass je nach Art der für den Sitzbezug verwendeten Materialien in denjenigen Bereichen, in denen der Benutzer zu dem Sitz in Kontakt gelangt, eine nicht ausreichende Be- bzw. Durchlüftung besteht, so dass der Benutzer in den genannten Kontaktbereichen leicht bzw. schnell transpiriert und sich daher unbehaglich fühlt. Es wurden daher verschiedene Versuche unternommen, die genannten Kontaktbereiche so zu gestalten, dass eine möglichst gute Atmungsaktivität erreicht wird. Beispielsweise geht aus der DE 43 04 870 A1 ein Sitzbezug hervor, der aus einem Ledermaterial besteht, das im gesamten Bereich feinporige Einstanzungen aufweist, die eine Belüftung ermöglichen sollen. Aus der WO 99/54163 geht ein Sitzbezug für Kraftfahrzeuge hervor, der für eine Belüftung der anliegenden Körperbereiche eines Benutzers eine obere, die Rückenlehne überdeckende Schicht und eine untere, die Sitzfläche bedeckende Schicht aufweist, wobei die obere und die untere Schicht jeweils aus vertikal verlaufenden und miteinander verbundenen Textilfäden bestehen, die eine netzartige Struktur bilden, die eine ausreichende Belüftung ermöglichen soll.

Aus der US-A-6 161 231 ist es bekannt, bei einem Sofa einen Bezug vorzusehen, der sich gegenüberliegende Schlafflächen unterschiedlicher Materialien besitzt.

Beispielsweise kann die eine Schlaffläche für wärmere Nächte Baumwolle oder Seide, die andere Seite dagegen Wolle oder Flannel aufweisen. In der US 2002/087532 ist ein Hinweis auf einen Stuhl enthalten, dessen Sitzteil Leder, Segeltuch oder Seide aufweisen kann.

Die Aufgabe der vorliegenden Erfindung besteht darin, einen Fahrzeugsitz mit einem Sitzbezug zu schaffen, der einerseits eine große Atmungsaktivität in den Kontaktbereichen zu einem Benutzer ermöglicht und durch den zudem Feuchtigkeit in einem hohem Maße hindurch diffundieren kann.

Diese Aufgabe wird durch einen Sitzbezug für einen Fahrzeugsitz mit den Merkmalen des Patentanspruches 1 gelöst.

Der wesentliche Vorteil der vorliegenden Erfindung besteht darin, dass infolge der Verwendung von Seide in den Kontaktbereichen zu einem Benutzer eine hohe Atmungsaktivität gewährleistet ist. Zudem nimmt Seide Feuchtigkeit bzw. Wasserdampf in einem großen Maße auf. Dies bedeutet, dass durch die neuartige Verwendung von Seide im Kontaktbereich eines Fahrzeugsitzes zu einem Benutzer eine hervorragende Belüftung des Kontaktbereiches und ein guter und schneller Abtransport von Feuchtigkeit aus dem Kontaktbreich erzielt werden, so dass sich der Benutzer auch bei relativ hohen Temperaturen äußerst behaglich fühlen kann und nicht transpiriert. Zudem fühlt sich Seide besonders angenehm an und hat eine leicht kühlende Wirkung. Seide ist daher insbesondere auch bei höheren Temperaturen sehr angenehm.

Bei einer bevorzugten Ausgestaltung der Erfindung befindet sich als Unterschicht unter der Seidenschicht eine Daunenfüllung, die vorzugsweise etwa 2 cm dick ist. Diese Daunenschicht ist sehr atmungsaktiv und nimmt ebenso wie Seide Wasserdampf bzw. Transpirationsflüssigkeit in einem großen Maße auf. Die Atmungsaktivität des erfindungsgemäßen Sitzbezuges wird daher weiter erhöht.

Besonders vorteilhaft ist der erfindungsgemäße Bezug bei Fahrzeugsitzen anwendbar, auf denen ein Benutzer besonders lange verweilt. Dies gilt z.B. für Autositze, Flugzeugsitze, Reisebussitze, Fährensitze etc..

Weitere vorteilhafte Ausgestaltungen der Erfindung gehen aus Unteransprüchen hervor.

Im folgenden werden die Erfindung und deren Ausgestaltungen im Zusammenhang mit den Figuren näher erläutert. Es zeigen:
- Figur 1: in perspektivischer Darstellung einen erfindungsgemäßen Fahrzeugsitz und
- Figur 2: einen Querschnitt durch den Sitzbezug des erfindungsgemäßen Fahrzeugsitzes.

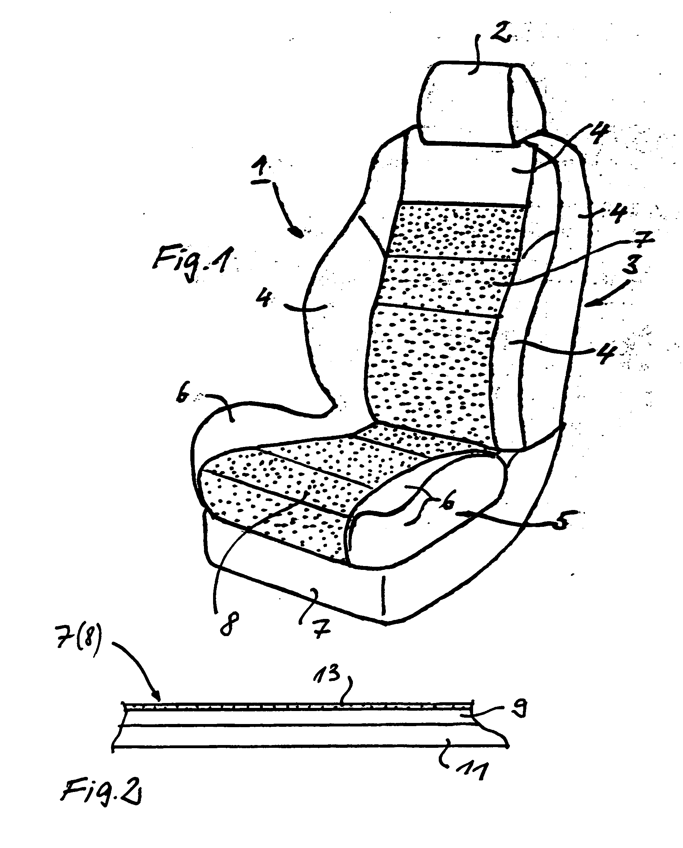

In der Figur 1 ist ein Fahrzeugsitz, bei dem es sich vorzugsweise um einen Automobilsitz oder einen Flugzeugsitz handelt, mit 1 bezeichnet. Der Fahrzeugsitz 1 umfaßt ein Lehnenteil 3 und ein Sitzteil 5. Das Sitzteil 5 ist auf einem den Fahrzeugsitz 1 tragenden Basisteil 7 angeordnet. Das Lehnenteil 3 kann oberseitig eine Nackenstütze 2 aufweisen.

In der ersichtlichen Weise weist das Lehnenteil 3 außen- und vorzugsweise auch oberseitig jeweils mit 4 gekennzeichnete Besatz- bzw. Randbereiche auf, die beispielsweise aus einem Ledermaterial bestehen. Für die Randbereiche 4 sind auch beliebig andere Materialien, wie beispielsweise Textilmaterialien, Kunststoffmaterialien oder auch Seide denkbar. In der entsprechenden Weise weist das Sitzteil 5 seitliche Randbereiche 6 auf, die ebenfalls vorzugsweise aus Leder oder den im Zusammenhang mit den Randbereichen 4 genannten anderen Materialien bestehen.

Gemäß dem Hauptmerkmal der vorliegenden Erfindung weist der Sitzbezug 1 des vorliegenden Fahrzeugsitzes in denjenigen Kontaktbereichen, die bei seiner Benutzung von einem Benutzer berührt werden, an der dem Benutzer zugewandten Seite einen Seidenstoff bzw. eine Seidenschicht 13 auf, die eine hohe Atmungsaktivität und große Feuchtigkeitsdurchlässigkeit sicherstellt. Genauer gesagt besitzt das Lehnenteil 3 einen Kontaktbereich 7, der an der dem Benutzer zugewandten Seite die Seidenschicht 13 aufweist, wie dies durch die gepunktete Fläche dargestellt ist. Entsprechend besitzt das Sitzteil 5 einen dem Benutzer zugewandten Kontaktbereich 8, der ebenfalls aus einer Seidenschicht 13 besteht.

Vorzugsweise handelt es sich bei dem Kontaktbereich 7 des Lehnenteiles um einen zwischen den beiden seitlichen Randbereichen 4 verlaufenden mittleren Bereich, der vorzugsweise ausgehend von dem unteren Ende des Lehnenteiles 3 nach oben bis zur Nackenstütze 2 oder einem von dieser beabstandeten Ort verläuft. Entsprechend handelt es sich bei dem Kontaktbereich 8 um einen zwischen den seitlichen Randbereichen 6 des Sitzteiles 5 verlaufenden mittleren Bereich, der vorzugsweise ausgehend von dem hinteren Ende des Sitzteiles 5 bis zum vorderen Ende desselben und zweckmäßigerweise auch an der vorderen Seite des Sitzteiles 5 nach unten bis zum Basisteil 7 verläuft. Auf diese Weise wird sichergestellt, dass die gesamte Kontaktfläche zu einem Benutzer die gewünschte Atmungsaktivität und Feuchtigkeitsdurchlässigkeit aufweisen.

In der Figur 2 ist der Aufbau der Kontaktbereiche 7 bzw. 8 dargestellt. Diese bestehen aus der Seidenschicht 13 und einer darunter angeordneten Unterschicht 9, die vorzugsweise durch eine etwa 2 cm dicke Daunenschicht bzw. Daunenfüllung gebildet wird. An der der Seidenschicht 13 abgewandten Seite der Unterschicht 9 befindet sich, wie im Zusammenhang mit Fahrzeugsitzen üblich, eine polsternde Schaumstoffschicht 11, unter der eine Deckschicht (nicht dargestellt) angeordnet sein kann. Die Unterschicht 9 kann auch eine Schaumstoffschicht oder eine Watteschicht sein.

Die Seidenschicht 13 wird vorzugsweise an der Unterschicht 9 mit der Hilfe von Quer- und Längsnähten vernäht, so dass, von den Nahtbereichen abgesehen, Relativbewegungen zwischen der Unterschicht 9 und der Seidenschicht 13 möglich sind. Diese Relativbewegungen erhöhen den Luft- und Feuchtigkeitstransport bei der Belegung des Sitzes vom Benutzer weg in Richtung auf das Sitzinnere durch die Schichten 13, 9 und 11 und bei Nichtbelegung des Sitzes in der umgekehrten Richtung nach außen. Durch die Fahrzeugbewegungen entsteht insbesondere auch im Zusammenhang mit den genannten Relativbewegungen eine Art Pumpwirkung durch Zusammendrücken, Aufweiten und Verschieben der Schichtfolge 13, 9, 11. Insbesondere trägt hierzu auch die Schaumstoffschicht 11 bei. Es können daher Körperwärme und Feuchtigkeit verstärkt abgeführt werden. Die genannte Pumpwirkung wird bei einer Kombination einer Daunenschicht 9 und einer Schaumstoffschicht 11 besonders gefördert.

Im Zusammenhang mit der vorliegenden Erfindung hat es sich herausgestellt, dass die Kombination der in der Figur 2 dargestellten Schichten 9, 11 und 13 zu einer besonders großen Atmungsaktivität und einem besonders großen Feuchtigkeitstransport führt, wenn es sich bei der Schicht 13 um einen Seidenstoff handelt.

Im Zusammenhang mit der Verwendung des Seidenstoffes für die Kontaktbereiche 7 und 8 wird darauf hingewiesen, dass die bevorzugt verwendeten Seidenstoffe durch entsprechende Ausrüstung im Hinblick auf Verschmutzungen widerstandsfähig gemacht werden können. Ebenso können Seidenstoffe so behandelt werden, dass sie flammhemmend und lichtecht sind. Die Abrieb- und Reißfestigkeit von technischen Seidenstoffen kann durch einen entsprechenden Aufbau, beispielsweise durch eine bestimmte Wahl der Fadendichte, des Fadentyps, der Fadendicke usw. in einem ausreichenden Maß sichergestellt werden, so dass solche Seidenstoffe bei Fahrzeugsitzen gut eingesetzt werden können.

Der Sitzbezug des vorliegenden Fahrzeugsitzes eignet sich sowohl als Erstbezug, wie auch als Nachrüst- oder Schonbezug.

## Patentansprüche

1. Fahrzeugsitz mit einem Lehnenteil (3), einem Sitzteil (5) und einem Sitzbezug, **dadurch gekennzeichnet, dass** der Sitzbezug des Lehnenteiles (3) und/oder des Sitzteiles (5) in Kontaktbereichen (7, 8) zu einem Benutzer an der dem Benutzer zugewandten Seite eine Seidenschicht (13) aufweisen.

2. Fahrzeugsitz nach Anspruch 1, **dadurch gekennzeichnet, dass** der Sitzbezug des Lehnenteiles (3) den Kontaktbereich (7) mit der Seidenschicht (13) in seinem mittleren Bereich aufweist.

3. Fahrzeugsitz nach Anspruch 1 oder 2, **dadurch gekennzeichnet, dass** der Kontaktbereich (7) des Lehnteiles (3) ausgehend von dem an das Sitzteil (5) angrenzenden unteren Endbereich bis zu einem vom oberen Ende des Lehnenteiles (3) beabstandeten Ort verläuft.

4. Fahrzeugsitz nach Anspruch 1 oder 2, **dadurch gekennzeichnet, dass** der Kontaktbereich (7) des Lehnenteiles (3) ausgehend von dem an das Sitzteil (5) angrenzenden unteren Endbereich des Lehnenteiles (3) bis zum oberen Ende des Lehnenteil (3) verläuft.

5. Fahrzeugsitz nach einem der Ansprüche 1 bis 4, **dadurch gekennzeichnet, dass** der Sitzbezug des Sitzteiles (5) den Kontaktbereich (8) in seinem mittleren Bereich aufweist.

6. Fahrzeugsitz nach Anspruch 5, **dadurch gekennzeichnet, dass** der Kontaktbereich (8) des Sitzteiles (5) ausgehend vom hinteren, an das Lehnenteil (3) angrenzenden Endbereich bis zum vorderen Endbereich oder Ende des Sitzteiles (5) verläuft.

7. Fahrzeugsitz nach einem der Ansprüche 1 bis 6, **dadurch gekennzeichnet, dass** der Kontaktbereich (8) des Sitzteiles (5) ausgehend von dem hinteren, an das Lehnenteil (3) angrenzenden Endbereich bis zum vorderen Ende des Sitzteiles (5) und darüber hinaus an der Vorderseite nach unten bis zum unteren Endbereich der Vorderseite des Sitzteiles (5) verläuft.

8. Fahrzeugsitz nach einem der Ansprüche 1 bis 7, **dadurch gekennzeichnet, dass** unter der Seidenschicht (13) eine Unterschicht (9) angeordnet ist.

9. Fahrzeugsitz nach Anspruch 8, **dadurch gekennzeichnet, dass** die Unterschicht (9) eine Daunenschicht, eine Schaumstoffschicht oder eine Watteschicht ist.

10. Fahrzeugsitz nach Anspruch 8 oder 9, **dadurch gekennzeichnet, dass** sich unterhalb der Unterschicht (9) eine Schaumstoffschicht (11) befindet.

11. Fahrzeugsitz nach einem der Ansprüche 8 bis 10, **dadurch gekennzeichnet, dass** die Seidenschicht (13) und die Unterschicht (9) oder die Seidenschicht (13), die Unterschicht (9) und die Schaumstoffschicht (11) durch voneinander beabstandete Nähte miteinander verbunden sind.

12. Fahrzeugsitz nach Anspruch 11, **dadurch gekennzeichnet, dass** die Nähte in Quer- und Längsrichtung voneinander beabstandet verlaufen.

13. Fahrzeugsitz nach einem der Ansprüche 1 bis 12, **dadurch gekennzeichnet, dass** der Kontaktbereich (8) des Sitzteiles (5) seitlich von Randbereichen (6) umgeben ist.

14. Fahrzeugsitz nach einem der Ansprüche 1 bis 13, **dadurch gekennzeichnet, dass** der Kontaktbereich (7) des Lehnenteiles (3) seitlich und/oder oberseitig von Randbereichen (4) umgeben ist.

15. Fahrzeugsitz nach Anspruch 13 oder 14, **dadurch gekennzeichnet, dass** die Randbereiche (4) des Lehnenteiles (3) und/oder die Randbereiche (6) des Sitzteiles (5) aus einem Ledermaterial, einem Textilmaterial, einem Kunststoffmaterial oder Seide bestehen.

16. Fahrzeugsitz nach einem der Ansprüche 1 bis 15, **dadurch gekennzeichnet, dass** die Seidenschicht (13) aus einem Seidenstoff einer hohen Fadendichte und/oder einer vorgegebenen Fadenart und/oder einer vorgegebenen Fadenstärke zur Erzielung einer hohen Abrieb- und Verschleißfestigkeit besteht.

17. Fahrzeugsitz nach einem der Ansprüche 1 bis 16, **dadurch gekennzeichnet, dass** der Sitzbezug ein Erstbezug oder ein Nachrüstbezug ist.

## Claims

1. A vehicle seat having a backrest part (3), a seat part (5) and a seat covering,
**characterised in that** the seat covering of the backrest part (3) and/or of the seat part (5) comprises a layer of silk (13) in areas (7, 8) in contact with a user at the side closer to the user.

2. A vehicle seat according to Claim 1,
**characterised in that** the seat covering of the backrest part (3) comprises the contact area (7) with the layer of silk (13) in its middle region.

3. A vehicle seat according to Claim 1 or 2,
**characterised in that** the contact area (7) of the backrest part (3) runs from the lower end region adjacent to the seat part (5) to a location spaced from the upper end of the backrest part (3).

4. A vehicle seat according to Claim 1 or 2,
**characterised in that** the contact area (7) of the backrest part (3) runs from the lower end region of the backrest part (3) adjacent to the seat part (5) to the upper end of the backrest part (3).

5. A vehicle seat according to one of Claims 1 to 4,
**characterised in that** the seat covering of the seat part (5) comprises the contact area (8) in its middle region.

6. A vehicle seat according to Claim 5,
**characterised in that** the contact area (8) of the seat part (5) runs from the rear end region adjacent to the backrest part (3) to the front end region or end of the seat part (5).

7. A vehicle seat according to one of Claims 1 to 6,
**characterised in that** the contact area (8) of the seat part (5) runs from the rear end region adjacent to the backrest part (3) to the front end of the seat part (5) and also at the front side downwards to the lower end region of the front side of the seat part (5).

8. A vehicle seat according to one of Claims 1 to 7,
**characterised in that** an under layer (9) is disposed beneath the layer of silk (13).

9. A vehicle seat according to Claim 8,
**characterised in that** the under layer (9) is a layer of down, a layer of foam or a layer of cotton wool.

10. A vehicle seat according to Claim 8 or 9,
**characterised in that** a layer of foam (11) is located beneath the under layer (9).

11. A vehicle seat according to one of Claims 8 to 10,
**characterised in that** the layer of silk (13) and the under layer (9) or the layer of silk (13), the under layer (9) and the layer of foam (11) are connected to each other by spaced-apart seams.

12. A vehicle seat according to Claim 11,
**characterised in that** the seams run spaced apart in the transverse and longitudinal directions.

13. A vehicle seat according to one of Claims 1 to 12,
**characterised in that** the contact area (8) of the seat part (5) is laterally surrounded by edge areas (6).

14. A vehicle seat according to one of Claims 1 to 13,
**characterised in that** the contact area (7) of the backrest part (3) is surrounded laterally and/or at the top by edge areas (4).

15. A vehicle seat according to Claim 13 or 14,
**characterised in that** the edge areas (4) of the backrest part (3) and/or the edge areas (6) of the seat part (5) are made from a leather material, a textile material, a plastic material or silk.

16. A vehicle seat according to one of Claims 1 to 15,
**characterised in that** the layer of silk (13) is made from a silk fabric having a high thread count and/or a predetermined thread type and/or a predetermined thread thickness to achieve a high abrasion resistance and wear resistance

17. A vehicle seat according to one of Claims 1 to 16,
**characterised in that** the seat covering is a first covering or a retrofitted covering.

## Revendications

1. Siège de véhicule avec une partie de dossier (3), une partie d'assise (5) et un revêtement de siège, **caractérisé en ce que** le revêtement de la partie de dossier (3) et/ou de la partie d'assise (5) présente, dans les zones de contact (7, 8) avec l'utilisateur, une couche de soie (13) sur la face située du côté de l'utilisateur.

2. Siège de véhicule selon la revendication 1, **caractérisé en ce que** le revêtement de la partie de siège présente en son milieu sa zone de contact (7) avec la couche de soie (13).

3. Siège de véhicule selon la revendication 1 ou 2, **caractérisé en ce que** la zone de contact (7) de la partie de dossier (3) s'étend de la zone marginale inférieure située en bordure de la partie d'assise (5) jusqu'à une région située à une certaine distance de l'extrémité supérieure de la partie de dossier (3).

4. Siège de véhicule selon la revendication 1 ou 2, **caractérisé en ce que** la zone de contact (7) de la partie de dossier (3) s'étend de la zone marginale inférieure située en bordure de la partie d'assise (5) jusqu'à l'extrémité supérieure de la partie de dossier (3).

5. Siège de véhicule selon une des revendications 1 à 4, **caractérisé en ce que** le revêtement de la partie d'assise (5) a sa zone de contact (8) située en son milieu.

6. Siège de véhicule selon la revendication 5, **caractérisé en ce que** la zone de contact (8) de la partie d'assise (5) s'étend de la zone d'extrémité arrière située en bordure de la partie de dossier (3) jusqu'à la zone d'extrémité avant ou l'extrémité de la partie d'assise (5).

7. Siège de véhicule selon une des revendications 1 à 6, **caractérisé en ce que** la zone de contact (8) de la partie d'assise (5) s'étend de la zone d'extrémité arrière située en bordure de la partie de dossier (3) jusqu'à l'extrémité avant de la partie d'assise (5), et de plus en avant, s'étend vers le bas jusqu'à la zone d'extrémité inférieure de la face avant de la partie d'assise (5).

8. Siège de véhicule selon une des revendications 1 à 7, **caractérisé en ce qu'**une sous-couche (9) est disposée en dessous de la couche de soie (13).

9. Siège de véhicule selon la revendication 8, **caractérisé en ce que** la sous-couche (9) est en duvet, en mousse ou en ouate.

10. Siège de véhicule selon la revendication 8 ou 9, **caractérisé en ce qu'**une couche en mousse (11) est disposée en dessous de la sous-couche (9).

11. Siège de véhicule selon une des revendications 8 à 10, **caractérisé en ce que** la couche de soie (13) et la sous-couche (9), ou la couche de soie (13), la sous-couche (9) et la couche de mousse (11) sont reliées entre elles par des coutures espacées les unes des autres.

12. Siège de véhicule selon la revendication 11, **caractérisé en ce que** les coutures sont disposées en direction longitudinale et en direction transversale, avec espacement entre elles.

13. Siège de véhicule selon une des revendications 1 à 12, **caractérisé en ce que** la zone de contact (8) de la partie d'assise est bordée latéralement par des zones marginales (6).

14. Siège de véhicule selon une des revendications 1 à 13, **caractérisé en ce que** la zone de contact (7) de la partie de dossier (3) est bordée latéralement et/ou au-dessus par des zones marginales (4).

15. Siège de véhicule selon la revendication 13 ou 14, **caractérisé en ce que** les zones marginales (4) de la partie de dossier (3) et/ou les zones marginales (6) de la partie d'assise (5) sont en cuir, en matériau textile, en matière plastique ou en soie.

16. Siège de véhicule selon une des revendications 1 à 15, **caractérisé en ce que** la couche de soie (13) est faite d'une soie dont les fils sont de haute densité et/ou d'un genre prédéfini et/ou d'une épaisseur prédéfinie, afin d'obtenir une résistance à l'abrasion et à l'usure élevée.

17. Siège de véhicule selon une des revendications 1 à 16, **caractérisé en ce que** le revêtement d'assise est de première monte ou de rééquipement.
